# EUROPEAN PATENT APPLICATION

(11) **EP 4 799 852 A1**
(43) Date of publication of application: **02.09.2026**
(21) Application number: 25161072.1
(22) Date of filing: 28.02.2025
(51) Int. Cl.: B60L 53/10, B60L 53/14, B60L 53/16, B60L 53/30, B60L 53/65, B60L 53/66, B60L 53/67, B60L 53/68, B60L 55/00, H02J 7/00, H04L 12/14, H02J 3/32

(54) **A CHARGING DEVICE FOR AT LEAST ONE AT LEAST IN PART ELECTRICALLY OPERATED MOTOR VEHICLE, A CORRESPONDING METHOD, A CORRESPONDING COMPUTER PROGRAM PRODUCT, AS WELL AS A CORRESPONDING COMPUTER-READABLE STORAGE MEDIUM**

(71) Applicant: Siemens Aktiengesellschaft, 80333 München (DE)
(72) Inventor: ASCENSAO PEIXOTO, Andre, 4405-633 VN Gaia (PT); ATABAO, Jorge, 2640-539 MAFRA Lisboa (PT); LOPES PEDROSA DA SILVA, Vasco Antonio, 2725-671 Algueirão-Mem Martins (PT)
(74) Representative: Siemens Patent Attorneys

(57) **Abstract**

The invention relates to a charging device (10) for at least one at least in part electrically operated motor vehicle (12), comprising a central unit (14) for controlling charging operations, and at least one charging plug (16, 18, 32) for providing electrical energy for the at least one at least in part electrically operated motor vehicle (12), wherein the central unit (14) comprises one central computing system (26) for generating operation commands, and wherein the charging plug (16, 18, 32) is connected to at least one communication controller (28, 30, 40) for receiving the centrally generated operation commands just from the one central computing system (26).

Furthermore, the present invention relates to a method for operating a charging device (10), to a corresponding computer program product, as well as to a corresponding computer-readable storage medium.

## Description

The present invention relates to a charging device for at least one at least in part electrically operated motor vehicle, comprising a central unit for controlling charging operations, and at least charging plug for providing electrical energy for the at least one at least in part electrically operated motor vehicle. Furthermore, the present invention relates to a corresponding method for operating the charging device, a corresponding computer program product, as well as a corresponding computer-readable storage medium.

The communication between an electric vehicle (EV) and a charger (EVSE electric vehicle supply equipment) is an important aspect of the electric vehicle charging process. The communication between the electrical supply equipment and the electrical vehicle typically uses standardized protocols. These protocols may be find in messages exchanged between the charger and the vehicle. Before charging begins, the charger and the electric vehicle exchange information about the capabilities and supports in a process called "handshaking". This includes exchanging data on voltage, current, and maximum possible charging power. During charging, the charger and the motor vehicle communicate continuously to control charging power and charging process. The charger sends data to the motor vehicle to adjust charging power, while the motor vehicle sends information about its current state of charge (SOC) and maximum possible charging power to the charger. The communication between the charger and the motor vehicle includes safety elements such as authentication and encryption to ensure only authorized devices are charged and that data cannot be intercepted or tempered with.

The communication inside the electric vehicle supply equipment during charging involves also several internal components working together to manage the charging process safely and efficiently. The communication model manages the communication with the motor vehicle and other external devices like smart meters or charging network service. It sends and receives messages based on the charging protocol and handles error detection and recovery. A so-called control circuit is responsible for managing the power electronics inside the charger, such as the onboard charger, DC/DC converter, and output stage. It communicates with the communication module to receive commands like setting charging power or controlling the charging process. The charger also includes sensors to monitor parameters like voltage, current, temperature, and power. These values are sent to the control circuit for real-time monitoring and protection. If any safety threshold is reached, the control circuit triggers appropriate protective actions, such as reducing charging power or stopping charging altogether. The components of the charger, according to the state of the art, communicates with each other over an internal communication bus using a protocol like CAN (controller area network) or Ethernet. This allows for real-time data exchange and synchronization between components. Throughout the charging process, the charger performs diagnostics to monitor its health and the quality of the power delivery. Any issue or errors are locked internally and may be reported to external systems like a smart meter or charging network server. In summary, communication inside the charger during charging involves several internal components working together to manage the charging process safely and efficiently. This includes communicating with the connected motor vehicle, monitoring power parameters, managing protection actions, and performing diagnostics and reporting.

Furthermore it is known, that the charger, as already mentioned, needs to communicate with the motor vehicle using the so-called pair of supply equipment communication controller board and the electric vehicle communication controller board. Until now, solutions according to the state of the art always use the same approach. In particular, one board fully populated with the supply equipment communication controller and the electric vehicle communication controller. From a technical point of view, there is no benefit in having each and every supply equipment communication controller and electric vehicle communication controller board with its own MPU+DDR+eMMC/Linux/ISO15118_SW_Stack. Moreover, all communication medium used until now were SPI (inside board) and CAN (outside board) or Ethernet. This makes the solutions less powerful and not so immune to noise/ signal integrity.

It is an object of the present invention to provide a charging device, a corresponding method, a corresponding computer program product, and a corresponding computer-readable storage medium, by which a more efficient way for charging a motor vehicle can be provided.

This object is solved by a charging device, a corresponding method, a corresponding computer program product, as well as a corresponding computer-readable storage medium according to the independent claims. Advantageous embodiments are presented in the dependent claims.

One aspect of the invention relates to a charging device for at least one at least in part electrically operated motor vehicle, comprising a central unit for controlling charging operations, and at least charging plug for providing electrical energy for the at least one at least in part electrically operated motor vehicle.

According to an embodiment, the central unit comprises just one central computing system for generating operation commands, and wherein the at least one charging plug is connected to at least one communication controller for receiving the centrally generated operation commands just from the central computing system.

Therefore, the central computing system as well as the at least one communication controller may be dislocated to each other. The central computing system may for example comprise a microcontroller and/or a microprocessor. In particular, therefore, with one charging device a plurality of charging plugs can be controlled. In particular, just one computing system is used in order to operate the at least one charging plug. It is obvious for a person skilled in the art, that also more than two charging plugs can be operated with the charging device. Therefore, a plurality of motor vehicles can be charged in a parallel operated by the one central computing system.

As already mentioned, the motor vehicle is at least in part electrically operated or fully electrically operated. Therefore, the motor vehicles may comprise at least one electrical energy storage device. The electrical energy storage device needs to be charged in order to provide electrical energy, for example, for an electrical engine of these motor vehicles. Therefore, the charging device is provided. The charging device is, for example, connected to a public grid and can receive electrical energy from the public grid and distributes this energy to the dispensing units.

In order to provide the communication between the charging device and the motor vehicle, the charging device comprises the one central computing system and the at least one charging plug. The charging plug in particular is configured for being plugged in in a loading socket of the motor vehicle. In particular, the charging plug may comprise at least one socket for being plugged in into the motor vehicle. It is also possible, that the charging plug is arranged at a dispensing unit, which may comprise a plurality of plugs to be plugged in the motor vehicle. For example, with the one dispensing unit an AC charging, a DC charging, an AC plus DC charging or also a megawatt charging can be provided.

Therefore, it is possible, that with the one charging device a plurality of motor vehicles can be charged in a parallel. Furthermore, it is possible, that the different charging plugs are located at different areas, for example 100 meter away from the central computing system. Therefore, an improved charging device for charging the plurality of motor vehicles can be provided.

In particular, the shown solution completely detaches the so-called MPU+DDR+eMMC/Linux/ISO15118_SW_Stack from the HPGP/PLC board in the dispensing units, in particular as the decentralized hardware, and the centralized Linux/software, which is just used the main Linux controller. Therefore, the charging device is capable of doing this because there is no SPI/CAN communication and, for example, a communication is solely using Ethernet mediums for communications.

In particular, this has the advantage, that also communication switches inside the plugs can be removed. In particular, now the plug/plugs are controlled by the central computing system inside the charging device. The computing system already exists and is being underutilized. The central computing system is now centralized in terms of software and turns the computing system cluster to the central point for all dispensing decisions.

Therefore, the board, in particular at the plug site, is smaller to produce, with less expensive components, and can be installed in smaller spaces. Furthermore, the EMC relevance and signal integrity is raised.

In particular, three different options may be provided by the invention. A first option describes the charging device with one charging plug and one communication controller, wherein the one communication controller is controlled by the one central computing system comprising a Linux. The communication controller does not have, for example, a Linux system. The communication controller is connected to a charging plug for being connected to the motor vehicle. A second option may describe the charging device with two communication controller, wherein the two communication controllers do not have a own Linux, but are connected to the central computing system provided with the Linux. Each of the communication controllers is connected to a charging plug. A third option may be that the charging device comprises for example two dispensing units. The dispensing unit are dislocated to the charging device. Each of the dispensing units may comprise at least one communication controller without a Linux. Each of the communication controller is connected to the just one central computing system. Each of the dispensing units may comprise at least one charging plug.

According to an embodiment, the charging device comprises a plurality of charging plugs, wherein the charging plugs are arranged in different positions. In particular, for example at least two or at least three charging plugs, or more than three charging plugs may be connected to the computing system. These plugs may be connected to dispensing units and may be arranged, for example in surroundings of over 100 metres away from the central computing system. This has the advantage, that a big area can be covered with a plurality of dispensing units using just one central computing system.

In another embodiment, the communication between the central computing system and the at least one communication controller is an Ethernet communication. Ethernet communication offers several advantages for various applications, in particular including electric vehicle charging. Ethernet supports high data transfer rates compared to other communication methods like a serial or a CAN bus. This enables faster and more efficient communication between devices, which is crucial in advanced charging features such as dynamic power sharing or real-time monitoring. Ethernet networks can easily accommodate multiple devices and expand with the addition of new devices without significant impact on performance. This makes it suitable for implementing smart charging solutions that support multiple EVs simultaneously or future charging devices by allowing easy integration of additional features. Ethernet is known for its robustness and reliability, making it an ideal choice for communication in harsh environments like those encountered in electric vehicle charging infrastructure. Its error detection mechanism help ensure data integrity even under adverse conditions. Furthermore, Ethernet has become a widely adopted standard for networking, both in wired and wireless communications. This standardization simplifies integration with other devices and systems while reducing implementation costs. With the increasing importance of data security in connected devices, Ethernet supports advanced security features such as encryption, authentication, and firewall to protect data during transmission. Ethernet communication can also utilize existing power lines for data transfer using PLC technology. This eliminates the need for separate cabling between devices, reducing installation costs and simplifying infrastructure deployment.

In another embodiment, the communication link between the central computing system and the at least one communication controller is a fiber optic link. Otherwise, a copper cable can be used. Fiber optic communication offers several advantages for use cases like electric vehicle charging infrastructure. Fiber optics support extremely high data transfer rates compared to copper-space communication methods. This enables faster and more efficient communication between devices, allowing for advanced features such as real-time monitoring, dynamic power sharing, and vehicle-2-grid integration. Fiber optic cables are not affected by EMI from nearby electrical equipment or high-power charging infrastructure. This makes them an ideal choice for harsh environments where electrical noise can disrupt communication. Fiber optics can transmit data over much longer distances compared to copper cables without needing repeaters or amplifiers, making it suitable for connecting widely distributed charging points or charging devices in large areas. Due to their low attenuation and high bandwidth, fiber optic networks offer lower latency than copper-based alternatives. This is crucial for real-time monitoring, control, and automation systems that require quick response times. Fiber optics are difficult to tap into or intercept without detection due to the lack of electromagnetic emissions. Additionally, advanced encryption techniques can be employed to protect data transmitted over fiber optic cables. Fiber optic cables are immune to EMP events, making them a reliable choice for communication infrastructure in critical applications where resilience against electromagnetic disturbance is essential. Furthermore, fiber optic cables are lighter than copper cables and more resistant to bending, stretching, and crushing, making them easier to install and maintain while reducing the risk of cable damage over time. The advantages offered by fiber optic communication make it well-suited for high-speed, secure, and reliable data transmission in critical infrastructure like electric vehicle charging networks.

In another embodiment for a communication between the central computing system and a first communication controller of the at least one communication controller a first communication network is used, and for a communication between the central computing system and a second communication controller of the at least one communication controller a second communication network is used. Furthermore, for example, for communicating between the central computing system and a third communication controller, a third communication network may be used. This has the advantage, that for example, if an attack of the communication between one of the communication controller and the computing system is provided, just this communication controller is infringed. The other communication controllers may work properly and therefore a more secure way for operating the charging device with the at least two communication controllers and for example two charging plugs is provided.

In another embodiment, a virtual local area network is used as the first communication network and/or the second communication network. The virtual local area network, also called a VLAN, is a logical grouping of network devices that communicates as if they were connected to the same broadcast domain, regardless of their physical location in the network. In other words, VLANs allow to create separate networks within an existing network infrastructure by using software configurations instead that are physically dividing the network with different switches. VLANs help segment a network into smaller broadcast domains, reducing broadcast traffic and improving overall network performance. By isolating devices with separate VLANs, the security can be enhanced by limiting access to sensitive resources or preventing unauthorized communication between devices in different VLANs. VLANs enable better control over network traffic by allowing to prioritize and manage bandwidth for specific groups of devices, such as phones or surveillance cameras. VLANs simplify network design by enabling to connect devices logically rather than physically, making it easier to manage and expand the network over time. With VLAN, the network can be easily expanded without worrying about physical limitations like running out of switch ports. In particular, in the context of charging of an at least in part electrically operated motor vehicle, using VLANs offers further benefits. An isolation of the critical systems can be provided, such as payment processing or remote monitoring, within their own VLAN to enhance security and protect sensitive data. VLANs also allow to prioritize traffic for time-sensitive applications like grid-time monitoring, dynamic power sharing, or vehicle-2-grid integration. By using VLANs, it is easily possible to scale the charging infrastructure as needed without complex network reconfigurations. VLANs also provide flexibility in designing and managing the network by enabling logical grouping of devices regardless of their physical location.

According to another embodiment, the at least one plug is configured for providing at least two different charging options. For example, as the charging options the plug may provide an AC charging and a DC charging. Furthermore, an AC/DC charging, for example, the so-called CCS charging, may be provided by the plug. Therefore, a different power providing from dispensing units for charging the motor vehicle can be provided.

In another embodiment, at least one plug is configured for providing megawatt charging. Megawatt charging refers to high-power fast-charging systems designed to charge electric vehicles with a power level of one megawatt or higher. These charging systems are capable of providing extremely fast charging, allowing motor vehicles to add significant range in a relatively short period. Megawatt charging enables the motor vehicle to charge much faster than lower-power alternatives like level two or even current industry-standard DC fast-charging systems, which typically operate at around 50 to 350 kilowatt. With the ability to quickly add significant range to batteries, megawatt charging makes long-distance travels more practical by reducing the time spent on charging stops. Megawatt charging systems require robust grid connections and infrastructure to support their high power demands. This includes powerful electrical transformers, high-capacity cabling and connectors, and efficient cooling systems to manage heat generated by the high-power electronics. As megawatt charging technology evolves, various standards and protocols are being developed to ensure interoperability between different charging systems and the motor vehicle. Megawatt charging systems must prioritize safety features such as over current protection, thermal management, and fault detection to ensure reliable and secure operation. While megawatt charging can significantly reduce the time spent charging the motor vehicle, it is essential that these high-power systems also operate efficiently to minimize energy losses during the charging process.

In another embodiment, the charging device is configured for bidirectional charging. Bidirectional charging refers to the capability of the charging device to supply power in both directions, in particular from the grid to the vehicle, the so-called charging mode, and from the vehicle back to the grid, the so-called discharging mode, also known as vehicle-2-grid (V2G). Bidirectional charging offers several benefits for the owners of the motor vehicle and the broader electrical grid. With bidirectional charging, motor vehicles can act as energy storage devices, providing power back to the grid during peak demand hours or when renewable energy generation is low. This helps stabilize the grid, improve efficiency, and reduce dependency on fossil fuel-space peaking plants. Bidirectional charging allows the owners of a motor vehicle to participate in demand response programs by discharging their vehicle's batteries back into the grid during peak hours. This helps reduce overall demand on the grid during source periods and supports more efficient use of available power resources. Motor vehicles with bidirectional charging capabilities can serve as backup power sources for critical infrastructure during outages, helping maintain continuity of service and reducing dependency on traditional emergency generation methods. Bidirectional charging enables better integration of renewable energy sources like solar or wind by storing excess energy in the batteries of the motor vehicle and releasing it back into the grid when needed. This helps balance intermittent renewable energy generation with demand. By participating in V2G programs, the motor vehicle can help reduce greenhouse gas emissions associated with electricity generation from fossil fuels. Moreover, bidirectional charging can facilitate better use of low-carbon renewable energy sources. Bidirectional charging allows owners of the motor vehicle to potentially profit from energy arbitrage by buying electricity when prices are low and selling it back to the grid when prices are high. Motor vehicles with bidirectional charging capabilities can provide auxiliary services like frequency regulation, voltage support, and harmonics mitigation, further improving power quality and reliability on the electrical grid. Bidirectional charging enables more efficient use of the existing charging infrastructure by allowing vehicles to supply power back into the grid needed. To realize these benefits, bidirectional charging systems must support proper communication protocols between the motor vehicle and the charging device, as well as have adequate protection mechanisms for safety and reliability.

In another embodiment the at one communication controller is connected via a communication switch to the central computing system. A communication switch in Ethernet networks, also known as Ethernet, offers several benefits compared to simple hubs or using direct connections between the devices. Switches limit broadcast traffic within the VLAN by only forwarding broadcast packets to the ports that need them, reducing unnecessary bandwidth usage and improving network performance. Modern switches support full-duplex communication, allowing data transmission in both directions simultaneously. This doubles the effect throughput compared to half-duplex operation. Switches enable easy expansion of networks by connecting multiple segments together, supporting larger networks with more devices. The switches support VLAN, allowing multiple broadcast domains to coexist on a single physical switch and simplifying network design and management. Switches provide QoS capabilities, allowing administrators to prioritize traffic based on factors like source/destination IP address, protocol type, or priority level. This helps ensure critical applications or services receive the necessary bandwidth. Switches allow configuring port-level bandwidth limits and traffic shaping policies to manage network resources more efficiently. Switches enable administrators to control access to specific ports or VLANs using features like port security, MAC filtering, and spanning tree protocols. By creating separate broadcast domains with VLANs, switches help to prevent unauthorized communication between devices in different VLANs. Switches can support redundant links and protocols like spanning tree protocol or rapid spanning tree protocol to automatically recover from failures and maintain network connectivity. Switches allow bundling multiple physical connections into a single logical link, improving reliability and increasing available bandwidth. Modern switches incorporate power-saving features like energy-efficient Ethernet to reduce energy consumption when connected devices are idle. Switches offer remote management capabilities through simple network management protocols, web-space interfaces, or command-line interfaces, simplifying network configuration and monitoring.

In another embodiment, the communication controller is configured as a supply equipment communication (SECC) controller and is additionally configured for additionally communicating with the motor vehicle, at least during a charging of the motor vehicle. In particular, the communication between SECC and the motor vehicle is performed when the plug is plugged into the motor vehicle. This can be provided during a charging process or also before the charging process or after the charging process.

Another aspect of the invention relates to a method for operating a charging device according to the preceding aspect. A first operation command is generated just by the central computing system and the first operation command is transmitted to a first communication controller. Additionally or alternatively, a second operation command is generated just by the central computing system and transmitted to a second communication controller.

According to an embodiment of the method, a charging of a motor vehicle connected to one of plugs is provided depending on the operation commands and/or a discharging of a motor vehicle connected to one of the plugs is provided depending on the operation commands. In particular, when for example, two motor vehicles are connected to the charging device, one, for example, at the first plug and one at the second plug, it can be provided, that for example one motor vehicle is charged and one motor vehicle is discharged. In particular, therefore, a bidirectional charging of the at least one motor vehicle can be provided.

In particular, the method is, at least in part, a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Advantageous embodiments of the charging device are to be regarded as advantageous embodiments of the method, the computer program product, as well as the computer-readable storage medium. The charging device therefore comprises means for performing the method.

A computing unit/electronic computing device/controller may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Independent of the grammatical term usage, individuals with male, female or other gender identities are included within the term.

Further features and feature combinations of the invention are obtained from the figure and their description as well as the claims. In particular, further implementations of the invention may not necessarily contain all features of one of the claims. Further implementations of the invention may comprise features or combinations of features, which are not recited in the claims.

Therefore, the drawings show in:
- FIG 1: a schematic view according to an embodiment of a charging device;
- FIG 2: a schematic block diagram according to an embodiment of a charging device; and
- FIG 3: another schematic block diagram according to an embodiment of the charging device.

In the figures, the same elements are comprising the same reference signs.

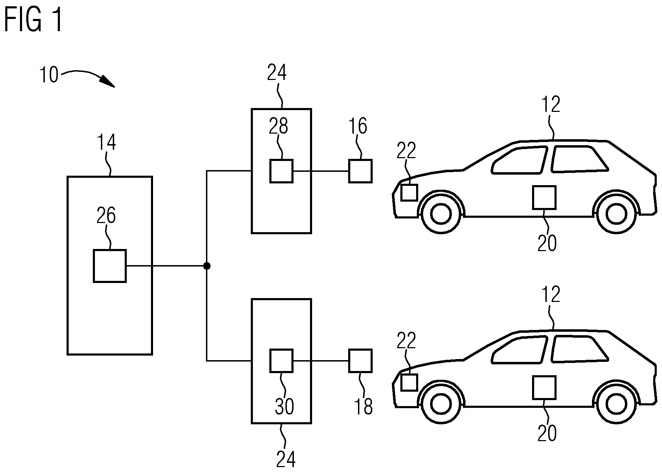

FIG 1 shows a schematic view according to an embodiment of a charging device 10. The charging device 10 is configured for charging at least in part electrically operated motor vehicles 12. Therefore, the charging device 10 comprises at least one central unit 14 for controlling charging operations, and at least one charging plug 16, 18 each for providing electrical energy for the at least one at least in part electrically operated motor vehicle 12.

As shown in FIG 1, two at least in part electrically operated motor vehicles 12 can be charged with the charging device 10. The electrically operated motor vehicles 12 may comprise at least an electrical energy storage device 20 for providing energy for electrical engines. Furthermore, each of the motor vehicles 12 may comprise a charging socket 20, which may be connected to the charging plug 16, 18.

Each charging plug 16, 18 may be arranged at a same charging station 24 or at different charging stations 24. The charging stations 24 may also be regarded as dispensing units.

According to an embodiment, the central unit 14 comprises a central computing system 26 for generating operation commands, and wherein the charging plug 16, 18 is connected to a communication controller 28, 30 for receiving the centrally generated operation commands just from the central computing system 26. In particular, as shown in FIG 1, the first charging plug 16 is connected to a first communication controller 28 and the second charging plug 18 is connected to a second communication controller 30.

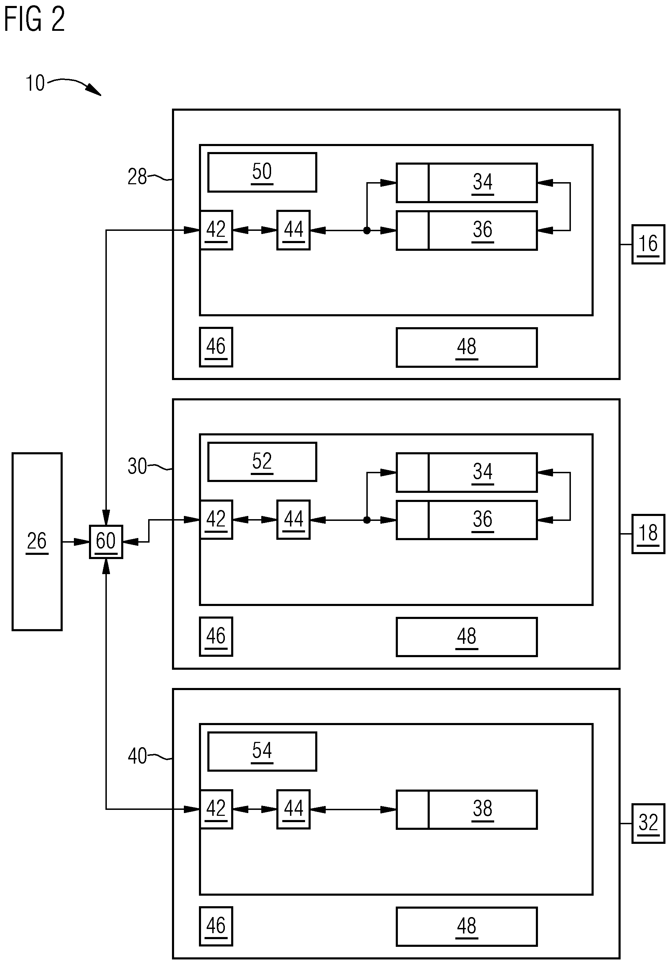

FIG 2 shows a schematic block diagram according to an embodiment of the charging device 10. As shown in FIG 2, the charging device 10 may comprise a third charging plug 32 and a third communication controller 40 connected to the third charging plug 32. The communication controllers 28, 30, 40 in FIG 2 are connected via a communication switch 60 to the one computing system 26. Therefore, FIG 2 shows, that the charging device 10 may comprise a plurality of charging plugs 16, 18, 32, wherein the charging plugs 16, 18, 32 are arranged at different positions. Furthermore, FIG 2 shows, that at least one charging plug 16, 18, 32 is configured for providing at least two different charging options. According to the shown embodiment, the first charging plug 16 and the second charging plug 18 may comprise two different charging options. For example, a first option 34 may be AC charging, a second option 36 may be DC charging. Furthermore, the third charging plug 32 may comprise a third option 38 for, for example, megawatt charging.

Furthermore, the charging device 10 may be configured for bidirectional charging. Therefore, FIG 2 shows, that the communication controller 28, 30, 40 may be configured as supply equipment communication controller (SECC) for additionally communicating with the motor vehicle 12, at least during a charging of the motor vehicle 12.

In particular, FIG 2 shows that the shown solution is capable of solving different problems in several specific areas. The shown solution avoids the use of the so-called MPU+DDR+eMMC/Linux/ISO15118_SW_Stack for each of every controller in the system. For example, the charging device 10 can have multiple dispensers, and instead of having multiple MPU/Linux, in particular one for each dispenser, there is just the one central computing system 26 centralized arranged. Therefore, there can be, for example, a distance between the central computing system 26 and the charging plug 16, 18, 32 of, for example, 100 metres. This has a great impact on EMC, and it is better overall for all signal integrity inside the charger and/or the plug. Because the invention may use VLANs, the solution also makes the system more secure because the Ethernet can be subdivided into sub-networks being more difficult for someone to enter in the main Ethernet network. Because there is usage of less components, less energy is needed during the operation.

Each of the dispenser may further use magnetics 42, an internal switch 44, another switch 46, as well as further components 48.

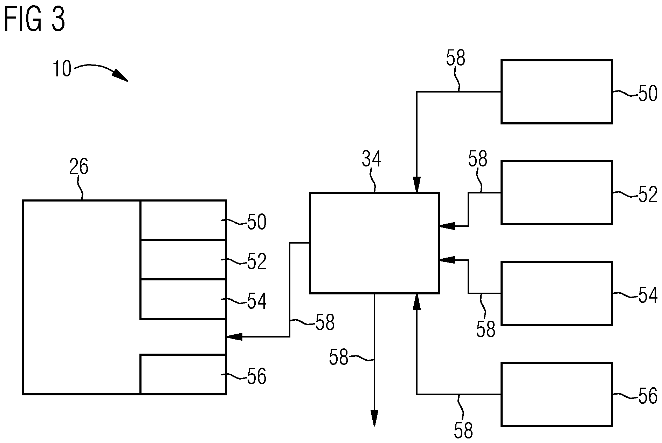

FIG 3 shows another schematic block diagram according to the charging device 10. In particular, different communication networks 50, 52, 54, 56 are shown. In particular, a first communication network 50 can be used between the central computing system 26 and the communication controller 28. Furthermore, a second communication network 52 can be used between the central computing system 26 and the communication controller 30. Furthermore, a third communication network 54 can be used with the third communication controller 40. Furthermore, a further communication network 56 can be used with further communication controllers, not shown in the figures.

Therefore, the communication between the central computing system 26 and the at least one communication controllers 28, 30, 40 is an Ethernet communication. Furthermore, the communication link 58 may be fiber optic link. Therefore, for a communication between the central computing system 26 and the communication controller 28 the first communication network 50 is used and for a communication between the central computing system 26 and the second communication controller 30 the second communication network 52 is used. Furthermore, a virtual local area network is used as the first communication network 50 and/or the second communication network 52.

Furthermore, the invention also relates to a method for operating the charging device 10. A first operation command is generated by the central computing system 26 and transmitted to the first communication controller 28. A second operation command is generated by the central computing system 26 and transmitted to the second communication controller 30. Furthermore, a charging of a motor vehicle 12 connected to one of the charging plugs 16, 18, 32 is provided depending on the operation commands and/or a discharging of the motor vehicle 12 connected to one of the plugs 16, 18, 32 is provided depending on the operation commands.

### List of Reference

- 10: charging device
- 12: motor vehicle
- 14: central unit
- 16: first charging plug
- 18: second charging plug
- 20: electrical energy storage device
- 22: socket
- 24: charging station
- 26: central computing system
- 28: first communication controller
- 30: second communication controller
- 32: third charging plug
- 34: first option
- 36: second option
- 38: third option
- 40: third communication controller
- 42: magnetics
- 44: internal switch
- 46: switch
- 48: further component
- 50: first communication network
- 52: second communication network
- 54: third communication netowrk
- 56: further communication network
- 58: fiber optic link
- 60: communication switch

## Claims

1. A charging device (10) for at least one at least in part electrically operated motor vehicle (12), comprising a central unit (14) for controlling charging operations, and at least one charging plug (16, 18, 32) for providing electrical energy for the at least one at least in part electrically operated motor vehicle (12),
**characterized in that**
the central unit (14) comprises one central computing system (26) for generating operation commands, and wherein the charging plug (16, 18, 32) is connected to at least one communication controller (28, 30, 40) for receiving the centrally generated operation commands just from the one central computing system (26).

2. The charging device (10) according to claim 1, **characterized in that** the charging device (10) comprises a plurality of charging plugs (16, 18, 32), wherein the charging plugs (16, 18, 32) are arranged at different positions.

3. The charging device (10) according to claim 1 or 2, **characterized in that** the communication between the central computing system (26) and the at least one communication controller (28, 30, 40) is an Ethernet communication.

4. The charging device (10) according to any one of claims 1 to 3, **characterized in that** a communication link between the central computing system (26) and the at least one communication controller (28, 30, 40) is a fiber optic link (58).

5. The charging device (10) according to any one of claims 1 to 4, **characterized in that** for a communication between the central computing system (26) and a first communication controller (28) of the at least one communication controller (28, 30, 40) a first communication network (50) is used and for a communication between the central computing system (26) and a second communication controller (30) of the at least one communication controller (28, 30, 40) a second communication network (52) is used.

6. The charging device (10) according to claim 5, **characterized in that** a virtual local area network protocol is used as the first communication protocol (50) and/or the second communication protocol (52).

7. The charging device (10) according to any one of claims 1 to 6, **characterized in that** at least one charging plug (16, 18, 32) is configured for providing at least two different charging options (34, 36, 38).

8. The charging device (10) according to any one of claims 1 to 7, **characterized in that** at least one charging plug (16, 18, 32) is configured for providing megawatt charging.

9. The charging device (10) according to any one of claims 1 to 8, **characterized in that** the charging device (10) is configured for bidirectional charging.

10. The charging device (10) according to any one of claims 1 to 9, **characterized in that** the at least one communication controller (28, 30, 40) is connected via a communication switch (60) to the central computing system (26).

11. The charging device (10) according to any one of claims 1 to 10, **characterized in that** the at least one communication controller (28, 30, 40) is configured as a supply equipment communication controller and configured for additionally communicating with the motor vehicle (12), at least during a charging of the motor vehicle (12).

12. A method for operating a charging device (10) according to any one of claims 1 to 11, comprising the steps of:
- generating a first operation command just by the central computing system (26) and transmitting the first operation command to a first communication controller (28); and/or
- generating a second operation command just by the central computing system (26) and transmitting the second operation command to a second communication controller (30).

13. A method according to claim 12, **characterized in that**
a charging of a motor vehicle (12) connected to one of the plugs (16, 18, 32) is provided depending on the operation commands and/or a discharging of a motor vehicle (12) connected to one of plugs (16, 18, 32) is provided depending on the operation commands.

14. A computer program product comprising program code means for performing a method according to claim 13.

15. A computer-readable storage medium comprising at least the computer program product according to claim 14.
